# EUROPEAN PATENT APPLICATION

(11) **EP 4 835 134 A1**
(43) Date of publication of application: **04.11.2026**
(21) Application number: 24912928.9
(22) Date of filing: 25.12.2024
(51) Int. Cl.: C23C 26/00, B22F 3/24, B23P 15/28, B23P 15/40, C22C 1/051, C22C 27/04, C22C 29/08, C23C 24/08

(54) **DEVICE AND METHOD FOR FORMING COATING LAYER**

(30) Priority: 28.12.2023 JP 2023222106
(71) Applicant: Mitsubishi Materials Hardmetal Corporation, Gifu 503-2301 (JP)
(72) Inventor: YAMAMOTO, Motomichi, Higashi-Hiroshima City, Hiroshima 7398511 (JP); MARUMOTO, Keita, Higashi-Hiroshima City, Hiroshima 7398511 (JP); ICHIKAWA, Hiroshi, Anpachi-gun, Gifu 503-2301 (JP); ABE, Takashi, Anpachi-gun, Gifu 503-2301 (JP)
(74) Representative: Gille Hrabal Partnerschaftsgesellschaft mbB Patentanwälte
(86) International application number: PCT/JP2024/045966
(87) International publication number: WO 2025/143042

(57) **Abstract**

An apparatus for forming a coating layer on a surface of an industrial component, includes a preheater for preheating a filler material made of a rod-shaped cemented carbide to a softening temperature of the filler material; a heat source for applying heat to the surface of the industrial component to form a molten pool on the surface of the industrial component; and a feeder that feeds the preheated filler material into the molten pool, wherein the filler material is fed in a softened state. A method for forming a coating layer on a surface of an industrial component, includes providing a filler material composed of a rod-shaped cemented carbide; softening the filler material composed of the rod-shaped cemented carbide; heating the surface of the industrial component to generate a molten pool in the surface of the industrial component; and feeding the filler material in a softened state.

## Description

### Technical Field

The present invention relates to an apparatus and method for forming a coating layer, in particular, a coating layer of a cemented carbide. This application claims priority based on Japanese Patent Application No. 2023-222106, filed on December 28, 2023. The entire contents of the Japanese patent application are incorporated herein by reference.

### Background Art

Powder metallurgy is a method for producing industrial components with a cemented carbide. This powder metallurgy process involves compaction of cemented carbide powder into a shape with machining allowances relative to the geometry of a target industrial component, sintering of the green compact, machining the sintered compact, for example, by grinding or electrical discharge machining into a structural member with a desired shape.

This method essentially requires a cutting allowance, and thus produces portions that are not used as the intended industrial component, to varying degrees, resulting in a waste of the expensive raw material powder containing W, Co, and Ni. In addition, the cemented carbide is used in portions that do not actually require the use of cemented carbide, resulting in excess use of expensive raw material powder.

In light of this situation, several proposals have been made.

For example, PTL 1 discloses a method for manufacturing a sintered compact with a complicated shape by additive manufacturing. This method can produce a sintered compact very close to a desired shape, and thus can reduce the amount of raw powder to be used.

PTL 2 discloses a cutting tool made of a cemented carbide only in required portions, and an intermediate layer between a composite component including a cemented carbide portion made of WC-Co based cemented carbide and a component portion containing 50 mass% or more Ni and Co in total. The composite component exhibits excellent high-temperature strength and suppressed cracking and peeling.

### Citation List

### Patent Literature

PTL 1: Japanese Unexamined Patent Publication No. 2018-83959
PTL 2: WO2019/069701

### Summary of Invention

### Technical Problem

An object of the present invention is to provide an apparatus and method for forming a coating layer of a cemented carbide. According to the apparatus and method, a coating layer can be produced without excess use of expensive W, Co, and Ni powders and the resulting coating layer has a flawless microstructure (the definition will be described later) and exhibits high durability.

### Solution to Problem

The apparatus for forming the coating layer of the cemented carbide is as follows:

An apparatus for forming a coating layer on a surface of an industrial component, comprising:
a preheater for preheating a filler material made of a rod-shaped cemented carbide to a softening temperature of the filler material;
a heat source for applying heat to the surface of the industrial component to form a molten pool on the surface of the industrial component; and
a feeder that feeds the preheated filler material into the molten pool,
wherein the filler material is fed in a softened state without being melted until the filler material is fed into the molten pool.

The apparatus for forming the coating layer may satisfy any one of the following conditions:
(1),
(1) and (2),
(1), (2), and (3),
(1) and (4), or
(1), (2), and (4).
   (1) The feeder includes a roll disposed between an outlet of the preheater and a position above the molten pool;
   (2) the roll has a pressing portion that applies an urging force perpendicular to the surface of the industrial component to the softened filler material;
   (3) the feeder further includes a second roll; and
   (4) the industrial component has at least one surface layer, and the molten pool is formed in the at least one surface layer.

The method for forming the coating layer of the cemented carbide is as follows:
A method for forming a coating layer on a surface of an industrial component, comprising:
providing a filler material composed of a rod-shaped cemented carbide;
softening the filler material composed of the rod-shaped cemented carbide;
heating the surface of the industrial component to generate a molten pool in the surface of the industrial component; and
feeding the filler material in a softened state without being melted until the filler material is fed into the molten pool.

The method for forming the coating layer may satisfy any one of the following conditions:
(5),
(6),
(7),
(5) and (7), and
(6) and (7).
   (5) The filler material of the rod-shaped cemented carbide is fed into the molten pool while an urging force is applied to the filler material;
   (6) the urging force is applied by a roll; and
   (7) the industrial component has at least one surface layer.

### Advantageous Effects of Invention

The coating layer of the cemented carbide formed with the apparatus and by the method includes a flawless microstructure due to low area fractions of abnormal phases and voids, and thus enhance the durability of industrial components. The industrial component, which has the coating layer of the cemented carbide only on its surfaces (e.g., an area requiring higher hardness or mechanical strength in the industrial component), can be produced with reduced amounts of expensive raw material powders containing W, Co, and Ni.

### Brief Description of Drawing

Fig. 1 is a schematic diagram of an exemplary apparatus for forming a coating layer of a cemented carbide according to an embodiment of the present invention.
Fig. 2 is a schematic diagram of an exemplary apparatus for forming a coating layer of a cemented carbide according to another embodiment of the present invention.
Fig. 3 is a schematic diagram of an exemplary die cutter, which is an industrial component with a surface coating layer formed according to Example. Description of Embodiments

The present inventor has examined the disclosures of PTLs 1 and 2 to find a method for enhancing the durability of cutting edges (edge-shaping portions) in tools such as cut-off tools, cutting tools, coating devices, and mold rolls with forming grooves, while minimizing the use of expensive raw powder materials containing W, Co, and Ni, and confirmed the following points:

### (1) Regarding additive manufacturing described in PTL 1

Since the granulated powder contains numerous internal voids and since no pressure forming such as pressing is performed, voids or pores remain within the laser-heated sintered article. One approach to suppress voids in the sintered article is to increase the laser output to melt the granulated powder at a high temperature. However, melting the granulated powder of cemented carbide containing both hard phases and binder phases at high temperatures causes the high-melting-point hard phase to melt, leading to the formation of brittle phases or grain-grown hard phases. This prevents creation of a flawless microstructure (defined later), resulting in reduced hardness and strength of the fabricated article. Furthermore, the additive manufacturing makes it difficult to produce large industrial components.

### (2) Regarding cutting tools including cemented carbides only in necessary parts as described in PTL 2

PTL 2 states that formation of an intermediate layer composed of a mixture of a cemented carbide and the ingredient of the industrial component reduces cracking and delamination. However, the cemented carbide, consisting of a high-melting-point hard phase and a low-melting-point binder phase, is melted by direct irradiation with a heat source; hence, the intermediate layer does not form a flawless microstructure. Furthermore, the industrial component is limited to Ni, Co, or a cemented containing 50 mass% or more in total Ni and/or Co. This makes it difficult to manufacture a cemented carbide composite structure in a steel industrial component.

The inventor has further examined the following publicly known technologies and arrived at the following facts:

### (3) Wire Directional Energy Deposition (DED)

Wire DED involves feeding wire-shaped filler material, melting it with a laser to coat an industrial component, and shaping the filler material into a desired form. However, it is difficult to control the temperature of the filler material with laser heating. If the filler material is a cemented carbide, the hard phase also melts. This results in the formation of brittle phases or abnormally grown hard phases within the coating layer, leading to a reduction in the hardness and strength of the coated industrial component.

### (4) Build-up Welding

Build-up welding involves melting both the surface of the industrial component and the tip of the wire-shaped filler material with a heat source to form a molten pool in the surface of the industrial component. The filler material is then fed into the molten pool from a direction different from the heat source to build up the surface of the industrial component. However, in this build-up welding process, use of a filler material of a cemented carbide precludes the formation of flawless microstructure in the coating layer.

The inventor has conducted further investigations based on this understanding. As a result, the inventor has reached the following finding: The filler material, which is a cemented carbide, should be in rod form rather than wire form; the filler material is preliminarily heated to a softening temperature without melting by preheating means, such as resistance heating device; the industrial component is then transferred into a molten pool created with a laser, electron beam, plasma, or arc; and then the filler material is heated in the molten pool so as not to melt the hard phase of the cemented carbide filler material, resulting in a coating layer with a flawless microstructure formed on the industrial component with the filler material of the cemented carbide.

The wire form refers to a flexible wire that can be fed from cylinder such as a bobbin, whereas the rod form refers to a wire with high rigidity that is difficult to bend and thus difficult to feed from the cylinder. The rod form may have any cross-section, such as circular, elliptical, or square.

An apparatus and a method for forming a coating layer of a cemented carbide according to embodiments of the present invention will now be described.

Throughout the specification and the claims, a numerical range expressed as "L to M" (where L and M are both numerical values) is synonymous with "L or more and M or less." This range includes both the upper limit (M) and the lower limit (L). If only the upper limit (M) is given a unit, the unit for the upper limit (M) is the same as that for the lower limit (L).

The term "cemented carbide" as used in the claims and specification refers to a carbide (cemented carbide) containing a base carbide selected from W carbide and carbide, nitride, or carbonitride of an element belonging to Groups 4 to 6 of the periodic table, and further containing iron group elements, such as Co or Ni.

The term "flawless microstructure" as used herein refers to a microstructure that does not contain (or contains below a predetermined proportion) brittle phases, low-carbon phases, free carbon phases, and defects in coarse hard phases (collectively referred to as abnormal phases), as well as voids (without distinguishing them from nests). The phrase "the coating layer has a normal appearance" means that visual inspection of the coating layer finds none of the following defects: cracks, overlaps, humping, undercuts, or serpentine patterns.

### 1. Filler material composed of rod-shaped cemented carbide

The filler material composed of a rod-shaped cemented carbide will now be described.

### (1) Composition

The rod-shaped cemented carbide is supplied in the form of a filler material to form a coating layer. The cemented carbide may have any composition without specific constraints, and examples include the following:

### 1) WC cemented carbide system

Co: 5.0 to 20.0 mass%, Cr: 2.0 mass% or less (including 0.0 mass%), V: 1.0 mass% or less (including 0.0 mass%), C: 5.0 to 7.0 mass%, balance being W and inevitable impurities;
preferably,
Co: 7.0 to 10.0 mass%, Cr: 1.5 mass% or less (including 0.0 mass%), V: 0.5 mass% or less (including 0.0 mass%), C: 5.0 to 7.0 mass%, balance W and inevitable impurities;
more preferably,
Co: 10.0 to 16.0 mass%, Cr: 1.0 mass% or less (including 0.0 mass%), V: 0.5 mass% or less (including 0.0 mass%), C: 5.0 to 7.0 mass%, the remainder being W and inevitable impurities.

### 2) WC-TiC-TaC-NbC cemented carbide system

Co: 5.0 to 20.0 mass%, TiC: 25.0 mass% or less (including 0.0 mass%), TaC: 20.0 mass% or less (including 0.0 mass%), NbC: 15.0 mass% or less (including 0.0 mass%), C: 5.0 to 7.0 mass%, balance W and inevitable impurities;
preferably,
Co: 7.0 to 10.0 mass%, TiC: 25.0 mass% or less (including 0.0 mass%), TaC: 10.0 mass% or less (including 0.0 mass%), NbC: 10.0 mass% or less (including 0.0 mass%), C: 5.0 to 7.0 mass%, remainder being W and inevitable impurities;
more preferably,
Co: 10.0 to 16.0 mass%, TiC: 20.0 mass% or less (including 0.0 mass%), TaC: 10.0 mass% or less (including 0.0 mass%), NbC: 10.0 mass% or less (including 0.0 mass%), C: 5.0 to 7.0 mass%, remainder being W and inevitable impurities.

### (2) Shape

The filler material made of a cemented carbide shall have a rod shape. The term "rod shape" refers to a wire material that is difficult to feed from the cylinder due to its high rigidity and resistance to bending. That is, it is distinguished from a wire shape, which is a bendable wire material that can be fed from a cylinder such as a bobbin.

The cemented carbide may have any rod shape, for example, a circular, elliptical, or square rod shape. The specific shape is determined based on the shape of the coating layer to be formed. An example shape is an elongate rod with a cross-sectional diameter of 3 to 8 mm and a length of 1200 to 2000 mm.

### (3) Production of filler material composed of rod-shaped cemented carbide

For example, a filler material composed of a rod-shaped cemented carbide having flawless structure can be manufactured by the following procedure.

### 1) Raw powder for filler material of rod-shaped cemented carbide

Raw powder for filler material of rod-shaped cemented carbide corresponding to the composition of the coating layer of the cemented carbide is prepared.

Examples of the raw powder include WC powder, Cr₃C₂ powder, VC powder, Co powder, TiC powder, TaC powder, NbC powder, TaNbC powder, TiN powder, and NbN powder.

The raw material powders preferably have an average particle size (Fisher size) within a predetermined range. For example, the average particle size (Fisher size) is 0.5 to 1.5 µm for WC powder, 1.0 to 2.0 µm for Cr₃C₂ powder, 1.0 to 2.0 µm for VC powder, and 1.5 to 2.5 µm for Co powder.

The Fisher size is measured with a sub-sieve sizer.

### 2) Formulation (Mixing)

The raw powders prepared in step 1) is formulated to a predetermined composition. Paraffin wax and ethanol are further added. The mixture is then pulverized and mixed in a ball mill for a predetermined time to uniformly disperse the raw powders. Subsequently, it is dried under reduced pressure.

### 3) Press Molding

The powder mixture prepared in step 2) is blended with a thickening agent, surfactant, and any other additive, and the blend is molded into a green compact that will serve as the base for the sintered rod shape via injection molding.

### 4) Sintering

The green compact prepared in step 3) is heated at a heating rate of 0.3 to 1.0°C/min to a temperature of 780 to 850°C and is held thereat for 100 to 140 minutes for degreasing. The green compact is then sintered at a heating rate of 2 to 8°C/min to a temperature of 1350 to 1450°C, held for 50 to 70 minutes thereat, under a vacuum of approximately 10 to 30 Pa, and then cooled to room temperature at a rate of 5 to 8°C/min under an argon gas atmosphere.

### 5) HIP Treatment

The sintered compact is subjected to HIP treatment that involves heating to 1250 to 1350°C in an Ar gas atmosphere at a heating rate of 5 to 10°C/min, holding under a pressure of 85 to 95 MPa for 50 to 70 minutes, and then cooling to room temperature at a cooling rate of 3 to 10°C/min.

The HIP treatment yields a filler material composed of rod-shaped cemented carbide.

### 2. Formation of coating layer of cemented carbide with filler material composed of rod-shaped cemented carbide

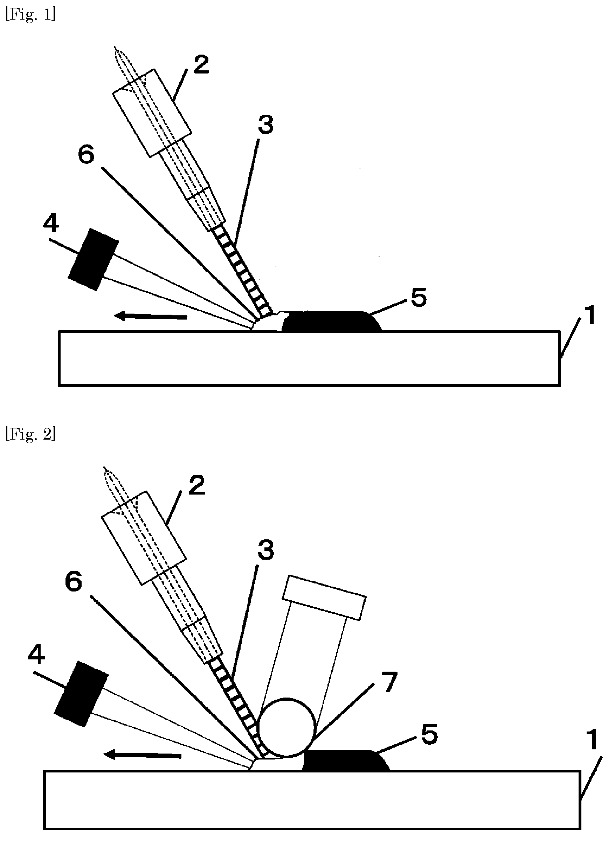

A coating layer of the cemented carbide is formed on the surface of an industrial component with the filler material composed of the rod-shaped cemented carbide manufactured in the aforementioned procedure, for example, with a molding apparatus as schematically shown in Figures 1 or 2.

Figure 1 is a schematic diagram of an example apparatus for forming a coating layer of a cemented carbide according to one embodiment of the present invention, and Figure 2 is a schematic diagram of an example apparatus for forming a coating layer of a cemented carbide according to another embodiment of the present invention. In Figures 1 and 2, common parts are assigned the same reference numerals.

It should be noted that Figures 1 and 2 lack illustration of the molten portion of the industrial component and the heat-affected zone (HAZ).

The apparatus for forming a coating layer of a cemented carbide shown in Figure 1 and the method for forming the coating layer with this apparatus will now be described.

The portion forming the coating layer on the industrial component (1) may have any shape without limitation; for example, its cross-sectional shape may be polygonal, semicircular, or semi-elliptical. The feed angle and incident angle described below are defined with the uppermost part (apex) of this cross-section as the reference line.

The filler material (3), consisting of a rod-shaped cemented carbide heated to its softening temperature in the preheater (hot wire torch) (2), is fed from a feeder (not shown) into the molten pool on the surface of the industrial component (1). The molten pool (6) is formed on the surface of the industrial component (1) by heat from a heat source (4) provided separately from the preheater. The filler material remains in a softened state without being melted until it is fed into this molten pool. Within this molten pool (6), the hard phases in the filler material (3) of the rod-shaped cemented carbide do not melt; only the binder phases melt. The cemented carbide is allowed to cool spontaneously, forming a coating layer (5) of the cemented carbide on the surface of the industrial component (1). The arrow in Figure 1 indicates the direction of the formation of the coating layer.

It should be noted that Figure 1 lacks illustration on the molten portion of the industrial component and the heat-affected zone (HAZ).

In the apparatus for forming the coating layer of the cemented carbide shown in Figure 1, the feed angle of the filler material (3) (feed angle of the filler material), which is a rod-shaped cemented carbide heated to a temperature at which it remains in a softened state without being melted until fed into the molten pool, is preferably above 4° to 75°, more preferably 5° to 60°, further preferably 7 to 45°, most preferably 10 to 35°. The incident angle of the heat radiated from the heat source (4) is 3 to 60° (more preferably 4 to 40°, most preferably 5 to 35°), and the feed angle is greater than the incident angle, for the following reasons: A feed angle exceeding 75° causes the laser spot to interfere readily with the hot wire torch used as the preheater. This heat leads to undesirable excess heating of the hot wire torch. A feed angle of less than 5° causes the laser spot to spread relative to the welding direction, leading to the formation of an excessive molten pool and consequently causing abnormalities such as serpentine weld beads.

In the apparatus for forming the coating layer of cemented carbide shown in Figure 1, the preheater (hot wire torch) (2) and the heat source (4) are both provided on the front where the coating layer is formed. Instead, at least one of the preheater (hot wire torch) (2) and the heat source (4) may be provided on the rear where the coating layer is formed or on a side where the coating layer is not formed.

The softening temperature of the filler material (3) of the rod-shaped cemented carbide indicates that the surface temperature of the filler material of the rod-shaped cemented carbide (if the base carbide is carbide of W) is in the range of 1200 to 2000°C (preferably 1200 to 1700°C) measured by a radiation thermometer.

In this manner, softening the filler material of the rod-shaped cemented carbide with the preheater (2) allows only the bonding phases to melt for forming the coating layer and the hard phases of the filler material of the rod-shaped cemented carbide not to melt within the molten pool formed by the heat applied to the industrial component from the heat source (4) provided separately from the preheater.

The preheater (2) may be exemplified by a resistance heating device. The heat source (4) provided separately from the preheater may be any device capable of applying heat, and may be exemplified by any one of the following generators: laser, electron beam, plasma, arc source, or high-frequency induction heating.

The filler material (3) composed of the rod-shaped cemented carbide remains in a softened state without melting until it is fed into the molten pool. This phenomenon occurs if the filler material is not exposed to the heat required to form a molten pool; the filler material remains in a softened state even if exposed to this heat; or the filler material remains in a softened state even if heat from the molten pool is transferred to the filler metal through conduction or radiation. In other words, the surface temperature of the filler material composed of the coating layer of the cemented carbide (where the carbide of W is the base carbide) should be within the range of 1200 to 2000°C to keep this state.

The apparatus for forming the coating layer of the cemented carbide will now be described with reference to Figure 2. The apparatus for forming the coating layer of the cemented carbide shown in Figure 2 differs from the apparatus for forming the coating layer of the cemented carbide shown in Figure 1 only in that a single roll (7) is positioned between the preheater (2) and a portion above the molten pool (since the surface of the roll (7) is separated from the molten pool by a slight distance and is not in contact with the molten pool, the distance is so small that it is difficult to discern in Figure 2).

Since the apparatus for forming a coating layer of a cemented carbide shown in Figure 2 has a single roll (a first roll 7), it can form a superior coating layer of a cemented carbide, as described in advantages 1) to 3) below. Figure 2 shows an example of use of a single roll, but the number of rolls may be two or more. For example, another roll may be positioned to sandwich the filler material. Additionally, a third roll may be positioned on the same side as the first roll, upstream of the second roll.
1) The first roll prevents the filler material of the rod-shaped cemented carbide from moving in a direction perpendicular to the feed direction during feed of the filler material of the rod-shaped cemented carbide, enabling stable feeding. Specifically, the first roll urges the filler material of the rod-shaped cemented carbide (apply an industrial component force perpendicular to the surface of the material. Examples of industrial component forces include 5 to 200 kPa.), causing the first roll to comes into close contact with the filler material of the rod-shaped cemented carbide, thereby stabilizing the feed. This more reliably suppresses overlap and humping, allows for faster feed rates of the filler material of the rod-shaped cemented carbide, and further reduces the appearance of defects in the cemented carbide.
   If two or more rolls are present, the roll closest to the molten pool must be positioned above the molten pool. The tension generated between multiple rolls stabilizes the feed of the filler material of the rod-shaped cemented carbide.
2) If a caliber is provide on the roll, the caliber embeds the cross-section of the filler material composed of a rod-shaped cemented carbide within its interior and thus can more effectively stabilize the feeding state. Since the outer shape of the rod is formed to match the shape of the grooves of the caliber, designing the shape of the caliber groove as a preferred configuration for the coating layer of the cemented carbide can produce a coating layer of a cemented carbide with a near-net-shape (close to the shape of the final coating layer).
3) Cooling of the filler material composed of the rod-shaped cemented carbide with the roll can reduce the temperature rise of the filler material of the rod-shaped cemented carbide before it enters the roll. This suppresses the generation of abnormal phases due to decomposition of carbide and the coarsening of carbide grains in the filler material of the rod-shaped cemented carbide.

The roll may be composed of any material that satisfies the advantages 1) to 3). However, the roll closest to the molten pool is preferably composed of copper. Since this roll is positioned near the molten pool generated by heat from the heat source and thus is exposed to elevated temperatures due to radiant heat from the molten pool, water cooling is more preferable.

The thickness of the coating layer of the cemented carbide formed on the industrial component varies depending on the application of the industrial component on which the coating layer is formed. For die cutters, which are cut-off tools, the thickness of the coating layer is preferably approximately 5 mm after the subsequent polishing process.

### 3. Post-Processing (polishing)

The surface of the coating layer of the cemented carbide should preferably not be rough. The acceptable surface roughness depends on the application of the industrial component. For example, for cut-off tools such as die cutters, a surface roughness of Rz ≤ 0.8 µm in accordance with ISO 4287-1997 is preferred, and polishing is performed to achieve this surface roughness.

Polishing processing can be exemplified by using different grinding wheels for rough grinding to finish grinding.

### 4. Microstructure of coating layer of cemented carbide

The coating layer of a cemented carbide consists of hard phases, binder phases, optionally present secondary hard phases, and anomalous phases. Voids also exist in the coating layer of the cemented carbide.

### 1) Hard phase

The hard phase may include any composition that can be used as the hard phase in a cemented carbide. Examples include tungsten carbide (which may contain carbides other than WC), composite nitrides of tungsten and titanium, and nitride ceramics (for example, TiN, TaN, and NbN).

The hard phases may have any average diameter without particular restrictions. More preferably, the equivalent circle diameter D50 (50% cumulative diameter: median diameter) is 0.3 to 5.0 µm. Within the average diameter of the hard phase satisfying this range, the coating layer exhibits superior hardness and toughness. An average diameter exceeding 5.0 µm leads to formation of larger binder phases, resulting in insufficient resistance to plastic deformation and increased susceptibility to wear. For example, a cut-off tool including the hard phases of the cemented carbide in a coating layer may exhibit premature deterioration of cut-off performance. An average grain size less than 0.3 µm leads to insufficient toughness against loads at a cut-off operation, potentially causing premature breakage of the cut-off tool. The average diameter of the hard phase is preferably 0.5 to 3.0 µm, more preferably 0.6 to 1.5 µm.

The cumulative 50% diameter (median diameter) refers to the equivalent circle diameter where the cumulative fraction reaches 50% in plotting the equivalent circle diameter on the horizontal axis and the cumulative fraction of hard phases relative to that equivalent circle diameter on the vertical axis. The number of hard phases on both the larger and smaller sides from this cumulative 50% diameter is equal.

### (2) Binder phase

The binder phases correspond to those of the hard phases. Examples include phases primarily composed of Co, Ni, and Fe.

The area fractions of the hard phases and the binder phases in the coating layer is preferably such that the hard phases is 50% or more and the binder phases is 40% or less, for the following reasons: An area fraction less than 50% of the hard phases or an area fraction greater than 40% of the binder phases leads to high toughness and superior damage resistance of the coating layer, but insufficient wear resistance, in other words, premature wear; hence, a cut-off tool including a coating layer containing the binder phases cannot maintain cutting performance over the long term.
It is further preferred that the hard phase be 85% or less and the binder phase be 5% or more.

### (3) Secondary hard phase

Cr, V, and other elements added optionally generate secondary hard phases in the form of carbides. Since the addition of Cr, V, and other elements is optional, the presence of a secondary hard phases is not essential. The secondary hard phases, if present, should occupy preferably 10% or less in area fraction in the coating layer, for the following reasons:
A area fraction of exceeding 10% of the secondary hard phases leads to poor wettability of the secondary hard phases with the binder phases, which mainly consists of Co and Ni. As a result, the hard phases and secondary hard phases readily agglomerate, potentially reducing the flexural strength and toughness of the coating layer. It is even more preferable for the area fraction of the secondary hard phases to be 5% or less (it may even be 0%).

### (4) Abnormal phase

The area fraction of the abnormal phases in the coating layer should preferably be 10% or less, for the following reasons: An area fraction exceeding 10% of the abnormal phases leads to an increase in the probability of exposition of the abnormal phases at the sharp cutting edge of an industrial component after finish polishing. Specifically, the cutting edge with the exposed abnormal phases lack the required wear resistance and toughness. Such an edge cannot maintain cutting performance over the long term.

Since the abnormal phases are preferably not present, the lower limit for the area fraction of abnormal phases is 0%.

Phases that correspond to none of the hard phase, the binder phase, or the secondary hard phase are regarded as abnormal phases. The abnormal phases, such as embrittlement phases, low-carbon phases, and free carbon phases, as well as defects in coarse hard phases will now be described, for the sake of thoroughness.

### (4-1) Brittle phase

The brittle phase consists of at least one selected from the group consisting of W₂C, M₆C, such as W₃Co₃C and W₄Co₂C, and M₁₂C, such as W₆Co₆C. Compared to WC, W₂C is hard but brittle and prone to fracture. M₆C and M₁₂C are extremely brittle, reducing the strength of the coating layer of the cemented carbide.

### (4-2) Low-carbon phase

The low-carbon phases arise from carbon deficiency or decarburization reaction during the manufacturing process. It consists of at least one of the brittle phases exemplified as M₆C (W₃Co₃C) and M₁₂C (W₆Co₆C).

The low-carbon phases are undesirable because the coating layer of a cemented carbide exhibits reductions in both flexural strength and compressive strength.

### (4-3) Free carbon phase

The free carbon phase refer to graphite formed if the carbon content is excess, or that carbides such as WC are decomposed and precipitated without binding with metallic elements.

The free carbon phases arise from addition of excess carbon or carburization during the manufacturing process and is undesirable because it reduces the flexural strength and hardness of the coating layer of the cemented carbide.

### (4-4) Coarse hard phase

The coarse hard phase refers to a large hard phase where "the diameter of the hard phases ≥ 3 × the average diameter (D50) of the hard phases."

The presence of coarse hard phases leads to a reduction in the flexural strength of the coating layer. If the industrial component coated with cemented carbide layer is a cut-off tool, these phases act as the initiation points for fracture. Furthermore, the presence of coarse hard phases increases the gaps between hard phases, leading to coarsening of the binder phases. Regions where the binder phases have coarsened exhibit reduced resistance to plastic deformation, resulting in accelerated wear and shortened service life.

### (5) Voids

The presence of voids or cavities is undesirable, for the following reasons: For example, if the industrial component coated with a cemented carbide layer is a cut-off tool, a sharp edge is required at its cutting edge. If voids exist, they may be exposed on the polished cutting edge of the cut-off tool. Regions with exposed voids cause localized deterioration in cutting performance, resulting in poor cutting.

The area fraction of the voids is defined as follows: 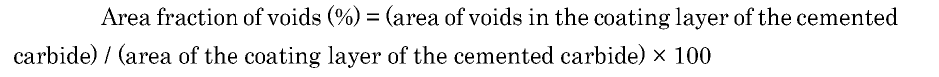 Area fraction of voids (%) = (area of voids in the coating layer of the cemented carbide) / (area of the coating layer of the cemented carbide) × 100

Since the absence of voids in the coating layer of the cemented carbide is preferred, the lower limit of the area fraction of the voids is 0%. The method for measuring the area fraction of voids will be described later.

### 5. Vickers hardness

The coating layer of the cemented carbide preferably has a Vickers hardness of 1200 HV or higher. A Vickers hardness below 1200 HV causes the coating layer of the cemented carbide to exhibit poor wear resistance and to be prone to wear. The Vickers hardness may have any upper limit. In one exemplary method described later of manufacturing the cemented carbide, the upper limit is approximately 1800 HV. The Vickers hardness is more preferably in the range of 1300 to 1800 HV, even more preferably in the range of 1400 to 1700 HV.

The Vickers hardness is measured under a load of 294 N in accordance with the method specified in ISO 6507 or ASTM E385.

The Vickers hardness (HV) of the coating layer is determined by the grain size of the W carbide and the area fraction of the binder phases. To produce a coating layer with a specified Vickers hardness, careful adjustment of the manufacturing conditions is necessary. For example, the Vickers hardness will be 1200 HV or higher under the following conditions: Sintering is performed at an appropriate processing temperature with materials such as VC or Cr₃C₂ for inhibiting growth of tungsten carbides, such that the Fischer diameter of the WC powder used as raw material is 0.3 to 0.8 µm and the area fraction of the binder phases is 5 to 30%; the Fisher diameter of the WC powder is 0.3 to 1.0 µm and the area fraction of the binder phases is 7 to 35%; or the Fischer diameter of the WC powder is 0.3 to 1.5 µm and the area fraction of the binder phases is 9 to 25%,

### 6. Identification of each phase and measurement of its area fraction

The binder phases, secondary hard phases, and hard phases are identified, and then the area fractions of these phases are measured, as follows:

### (1) Observation by EDS and EBSD

An arbitrary cross-section or surface of the cemented carbide coating layer is polished to remove fine irregularities and create a smooth surface, to avoid obstruction to measurements with a backscattered electron diffractometer (EBSD). An observation field is established on the smoothed surface for examination. The size and number of observation fields should be appropriately determined depending on the specifications of the EBSD. Several observation fields (e.g., five or more) are set at appropriate positions, where one observation field is, for example, 24 µm (vertical) by 72 µm (horizontal).

The samples are then observed with a field emission scanning electron microscope (SEM) equipped with an energy-dispersive X-ray spectrometer (EDS) and an EBSD system (for example, OIM Data Collection, AMETEK). Observation conditions should be determined based on the specifications of the systems used. In the case of use of the exemplified measuring system, observations are performed at an acceleration voltage of 20 kV, to simultaneously acquire EBSD patterns and EDS data. The working distance (distance between the surface of the objective lens and the sample) is 15 mm, the count rate of the measurement is 41,000 cps, and the interval between measurements is 50 nm.

Since observation points (pixels) are present discretely, the region (preferably a regular hexagon) extending until the midpoint between adjacent observation points is represented by the result of the measurement at that point. Among these observation points, if adjacent points have an azimuth difference of 5 degrees or more, the region extending until the midpoint is defined as a crystal grain. Observation points that have an azimuth difference of 5 degrees or more with all adjacent observation points, or observation points that is present alone without adjacent observation points, are not regarded as crystal grains. Only two or more observation points connected each other are identified as crystal grains.

### (2) Identification of each crystal grain

The observed data is read with, for example, AMETEK's OIM Analysis ver. 7.3.1. For each crystal grain, the EDS count values obtained from each observation point within the crystal grain corresponding to each element are averaged to yield the EDS observed values for each element in that crystal grain. The composition of each crystal grain is then derived from the resulting observed values. The detailed procedure is as follows:
The average EDS count values for all elements, W, Co, Ni, Fe, Cr, V, Ta, Ti, Nb, and others are calculated over the entire observation field. The EDS count values for each element in each pixel within each grain are then averaged to determine the composition of each grain.

The hard phase is considered an aggregate of crystalline grains with an hcp crystal structure, primarily composed of W. The binder phase is considered an aggregate of crystalline grains with either an fcc or hcp crystal structure, primarily composed of Co, Ni, or Fe. The secondary hard phase is considered an aggregate of crystalline grains with an fcc crystal structure, primarily composed of Cr, V, Ta, Ti, and Nb. Crystal grains not classified as the hard phase, bonding phase, or secondary hard phase are considered abnormal phases.

### (3) Measurement of size of hard phase

To identify coarse hard grains, the diameters (equivalent circle diameter) of hard phases are measured and the average grain size (D50) is calculated. As described above, hard phases with an average diameter at least three times the average diameter (D50) is identified as coarse hard phases, and the area fraction occupied by these coarse hard phases is calculated.

The calculated area fraction is added to the area fraction of the abnormal phases and the sum is subtracted from the area fraction of the hard phases.

For calculation of the average diameter, it is preferable to measure at least 300 crystal grains of the hard phases to precisely determine the average diameter.

### 7. Measurement of area fraction of Voids

Voids are assumed to be uniformly distributed within the coating layer of the cemented carbide and are measured as follows: A sample piece is cut out from the coating layer of the cemented carbide and is mirror-polished. An appropriate observation field of 430 µm by 600 µm is determined on the polished sample piece. The sample is subjected to image observation and a binarization process of the observed image to distinguish void areas from non-void areas.

In detail, the image is displayed in 256 grayscale levels, with white corresponding to 0 and black to 255. The lower limit is set to 0, and the upper limit is set to half the grayscale level that appears most frequently in the observed image. A threshold is then set by Otsu's binarization process. The areas that regarded as white are considered voids, and the area fraction of these white areas is measured.

This method demonstrates that the area fraction of voids is measured independently of the area fractions of the hard phases, binder phases, and other phases constituting the coating layer of the cemented carbide.

### 8. Measurement of Average Content of Each chemical component

The content of each industrial component is measured with an electron microanalyzer. A sample for analysis is cut out from the coating layer of the cemented carbide. Three observation fields of view, each at least 96 µm by 128 µm in size, are set on its polished surface (smoothed by removing minute irregularities to ensure no obstruction to characteristic X-ray analysis with the electron microanalyzer). The chemical components and their amounts are measured based on characteristic X-rays, and the average value of the observed results is calculated to determine the content of each chemical component.

### 9. Industrial component

The industrial component including a coating layer of a cemented carbide will now be described.

### (1) Application and material of industrial component

The industrial component including the coating layer of the cemented carbide may have any shape appropriate for their application without particular restrictions. Examples of the shape of the industrial component include those of cut-off tools (e.g., die cutters), cutting tools (e.g., end mills), coating devices (e.g., slot dies), and mold rolls.

The industrial component may be composed of any material suitable for the application without particular restrictions. Examples of such material include carbon steel, low-alloy steel, stainless steel, and WC cemented carbide.

### (2) Surface Layer

A coating layer of a cemented carbide may be formed directly on the surface of the industrial component. Alternatively, a surface layer consisting of one or more sublayers may be provided on the industrial component, and then a coating layer of a cemented carbide may be formed on the surface layer. The surface layer may have any composition without particular restrictions: Examples include NCF600, NCF718, and DCoCrC, as represented by JIS material symbols.

Since the thickness of the surface layer depends on the application and shape of the industrial component, the thickness cannot be definitively determined. An exemplary thickness is 1 to 5 mm.

The above explanation includes the following features:

### (Appendix 1)

An apparatus for forming a coating layer on a surface of an industrial component, comprising:
a preheater for preheating a filler material made of a rod-shaped cemented carbide to a softening temperature of the filler material;
a heat source for applying heat to the surface of the industrial component to form a molten pool on the surface of the industrial component; and
a feeder that feeds the preheated filler material into the molten pool,
wherein the filler material is fed in a softened state without being melted until the filler material is fed into the molten pool.

### (Appendix 2)

The apparatus for forming a coating layer on a surface of an industrial component recited in Appendix 1, wherein the feeder includes a roll disposed between an outlet of the preheater and a position above the molten pool;

### (Appendix 3)

The apparatus for forming a coating layer on a surface of an industrial component recited in Appendix 2, wherein the roll has a pressing portion that applies an urging force perpendicular to the softened filler material on the surface of the industrial component.

### (Appendix 4)

The apparatus for forming a coating layer on a surface of an industrial component recited in Appendix 2, wherein the feeder further includes a second roll.

### (Appendix 5)

The apparatus for forming a coating layer on a surface of an industrial component recited in any one of Appendices 1 to 4, wherein the preheater is a resistance heating device.

### (Appendix 6)

The apparatus for forming a coating layer on a surface of an industrial component recited in any one of Appendices 1 to 5, wherein the heat source that applies heat to form a molten pool on the surface of the industrial component is a heat generator selected from the group consisting of a laser generator, an electron beam generator, a plasma generator, an arc generator, and a high-frequency induction heater.

### (Appendix 7)

The apparatus for forming a coating layer on a surface of an industrial component recited in any one of Appendices 1 to 6, wherein the molten pool is formed on a surface layer including one or more sublayers provided on the surface of the industrial component.

### (Appendix 8)

A method for forming a coating layer on a surface of an industrial component, comprising:
providing a filler material composed of a rod-shaped cemented carbide;
softening the filler material composed of the rod-shaped cemented carbide;
generating a molten pool on the surface of the industrial component; and
feeding the filler material in a softened state without being melted until the filler material is fed into the molten pool.

### (Appendix 9)

The method for forming a coating layer on a surface of an industrial component recited in Appendix 8, wherein an urging force is applied to the filler material of the rod-shaped cemented carbide while the filler material is fed into the molten pool.

### (Appendix 10)

The method for forming a coating layer on a surface of an industrial component recited in Appendix 9, wherein the industrial component has a surface layer comprising one or more sublayers on its surface.

### Examples

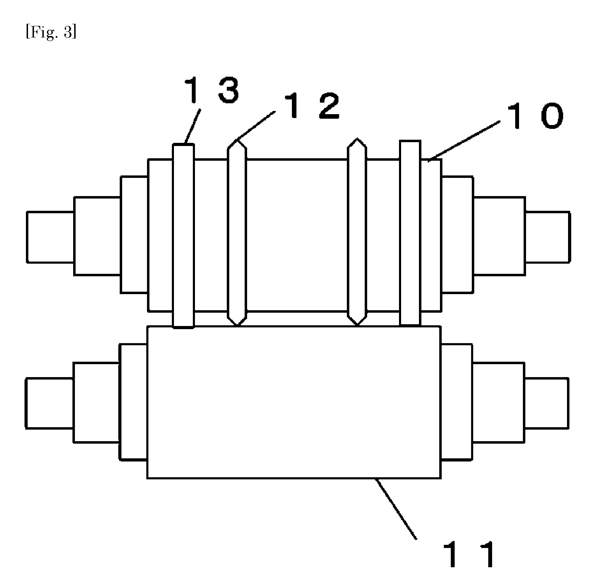

With reference to Fig. 3, Examples A and B of a coating layer of a cemented carbide will now be described. The coating layer is formed on the cutting edge (12) and the bearer portion (13) of a die cutter including a die cut roll (10) and an anvil roll (11). However, these examples should not be construed to limit the present invention.

### <Example A>

A coating layer of the cemented carbide was formed by the following procedure:

### (1) Raw material powder for filler metal composed of rod-shaped cemented carbide

Raw powders for filler material (forming a coating layer of a cemented carbide) made from a rod-shaped cemented carbide, i.e., three WC powders (average particle sizes (Fisher size: same applies below) of 1.2 µm, 2.3 µm, and 2.9 µm), Cr₃C₂ powder (average particle size of 1.4 µm), VC powder (average particle size of 1.5 µm), and Co powder (average particle size of 2.1 µm) were prepared. These raw powders were blended to formulate the composition shown in Table 1.

### (2) Formulation (Mixing)

Paraffin wax and ethanol were then added. The mixture was ground and mixed with a ball mill, followed by drying under reduced pressure. Ten mixed powders as shown in Table 1 were thereby produced.

### (3) Molding

To each of these mixed powders, a thickening agent and a surfactant were added, and the mixture was molded into an elongated green compact with a rod shape by injection molding.

### (4) Sintering

Each elongated green compact was heated to be degreased at a rate of 0.5°C/min to 750°C and held at this temperature for 60 minutes. Subsequently, the compact was sintered at a heating rate of 1.7°C/min to a temperature (shown in Table 1) in the range of 1360 to 1450°C for 60 minutes, under a vacuum of 20 Pa. The sintered compact was then cooled to room temperature at a rate of 2.9°C/min under an argon gas atmosphere.

### (5) HIP Treatment

Each sintered compact was subjected to HIP treatment involving heating to 1280°C in an Ar gas atmosphere at a heating rate of 4.7°C/min ad then holding at a pressure of 90 MPa for 60 minutes. The sintered compact was then cooled to room temperature at a cooling rate of 1.2°C/min.

Ten sintered compacts after HIP treatment were elongated compacts with a cross-sectional diameter of 5 mm and a length of 1500 mm.

### (6) Coating

Using a molding device shown in Fig. 1, ten filler materials of a rod-shaped cemented carbide were each used to form a coating layer of a cemented carbide with a thickness of 5 mm on the cutting edge and bearer portion of each industrial component, specifically a die cutter, to yield die cutters with ten different coating layers of cemented carbides (referred to as Examples 1 to 10).

The conditions during the process included a laser output of 3.5 kW, a laser spot size of 2.0 by 6.0 mm, a feed angle of filler material composed of a rod-shaped cemented carbide of 60°, a feed rate of filler material of 0.1 m/min, a laser incident angle of 30°, and a hot wire current of 200 A.

The laser, incident on the surface of the industrial component, forms a molten pool. The filler material, composed of a cemented carbide with a rod shape, was fed in a softened state without melting until it entered the molten pool.

### (7) Polishing

Each product was polished with a polishing wheel into a blade tip with a thickness of 3 mm. The roughness (Rz) was 0.8 µm.

Both the die-cutting roll and the anvil roll of the die cutter, manufactured from SCM440, had a roll diameter of 150 mm and a roll width (distance between bearers) of 230 mm.

For comparison, five die cutters with different coating layers of cemented carbides (referred to as Comparative Examples 1 to 5) were produced under variable laser irradiation conditions as described below, using the same raw powder materials as in Examples except for the average particle size of the WC powder and except that the laser was radiated onto both the industrial component and the filler material composed of a rod-shaped cemented carbide.

### (1') Raw material powders for coating layer of cemented carbide

Two WC powders (average particle sizes of 1.5 µm and 2.9 µm), Cr₃C₂ powder (average particle size of 1.4 µm), VC powder (average particle size of 1.5 µm), and Co powder (average particle size of 2.1 µm) were prepared. These powders were blended such that the coating layers of the cemented carbides each have a composition shown in Table 1.

### (2') Formulation (mixing) and (3') Molding

The same formulation (mixing) and molding processes were employed as in Examples.

### (4') Sintering

Each elongated green compact was heated to 750°C at a heating rate of 0.5°C/min and then held for 60 minutes thereat for degreasing. The compact was then heated to a temperature in the range of 1360°C to 1430°C (the sintering temperature listed in Table 1) at a heating rate of 1.7°C/min and held for 60 minutes thereat, under a vacuum of 20 Pa for sintering. The sintered compact was then cooled to room temperature at a rate of 2.9°C/min under an argon gas atmosphere.

### (5') HIP treatment

Each sintered compact was subjected to the HIP treatment as in Examples to yield a sintered compact with the same shape as in Examples.

### (6') Coating

Using the device shown in Fig. 1, five 5 mm thick coating layers of different cemented carbides were formed on the cutting edges and bearer portions of the respective die cutters, with five filler materials composed of rod-shaped cemented carbide as in Examples, except for an laser output of 6.5 kW, a laser spot size of 1.0 by 6.0 mm, a feed angle of 70° of a filler material composed of a rod-shaped cemented carbide, and a laser incident angle of 50°, and a hot wire current of 400 A to yield five die cutters (referred to as Comparative Examples 1 to 5) each having a coating layer of a different cemented carbide.

The laser spot was radiated onto the filler material, which consisted of the industrial component and the rod-shaped cemented carbide.

### (7') Polishing

Each product was polished as in Examples.

The compositions of the coating layers of cemented carbides in Examples 1 to 10 and Comparative Examples 1 to 5 were measured with the electron microanalyzer described above. The results are shown in Table 2.

Table 3 shows the area fractions of the hard phases, binder phases, abnormal phases, and voids observed by the aforementioned method, for the coating layers of cemented carbides formed on the die cutters. The area fraction of the secondary hard phases was 0.0% for all Examples and Comparative Examples. The appearance of all the coating layers was normal. It should be noted that, in Table 3, the abnormal phases and voids were identified by different methods, i.e., the abnormal phases were identified by EDS and EBSD while voids were identified by image analysis. Since the abnormal phases may contain voids in some cases, the sum of the area fractions of the hard phases, binder phases, abnormal phases, and voids may exceed 100%.

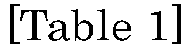

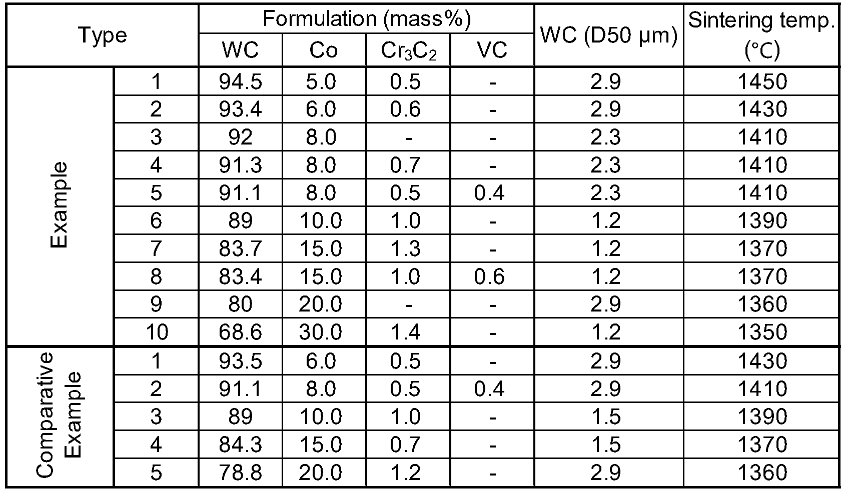

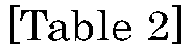

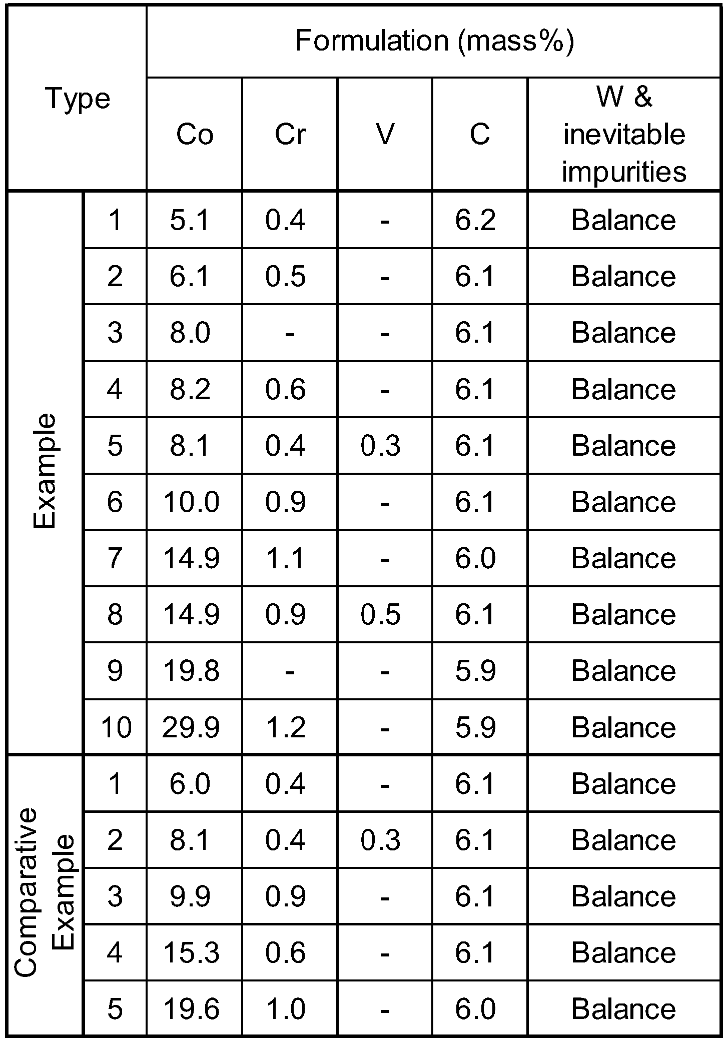

In Tables 1 and 2, symbol "-" indicates that no corresponding element was formulated.

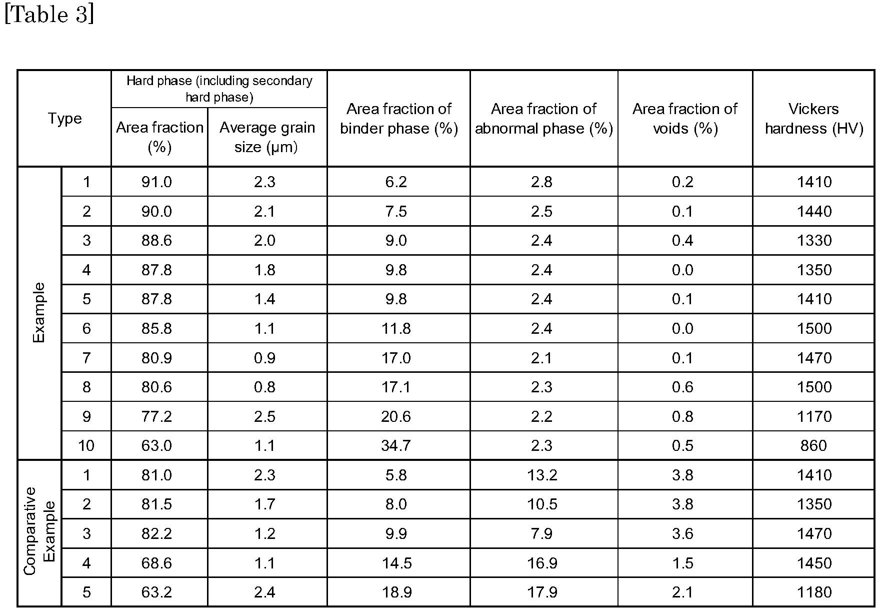

A nonwoven polyester fabric with a 0.2 mm thick was cut with each cutter of Examples 1 to 10 and Comparative Examples 1 to 5, under the following conditions:
Rotation speed: 600 rpm
Pressure: 2940 N
Blade protrusion: 1.5 µm
The state of the blade was checked every 10 minutes (6000 revolutions). When remnants of nonwoven fabric were found, the blade was deemed to have reached the end of its service life and the blade was observed. If a missing section was present, then the sample was classified as a defect; otherwise, it was determined as wear. The results are shown in Table 4.

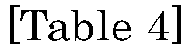

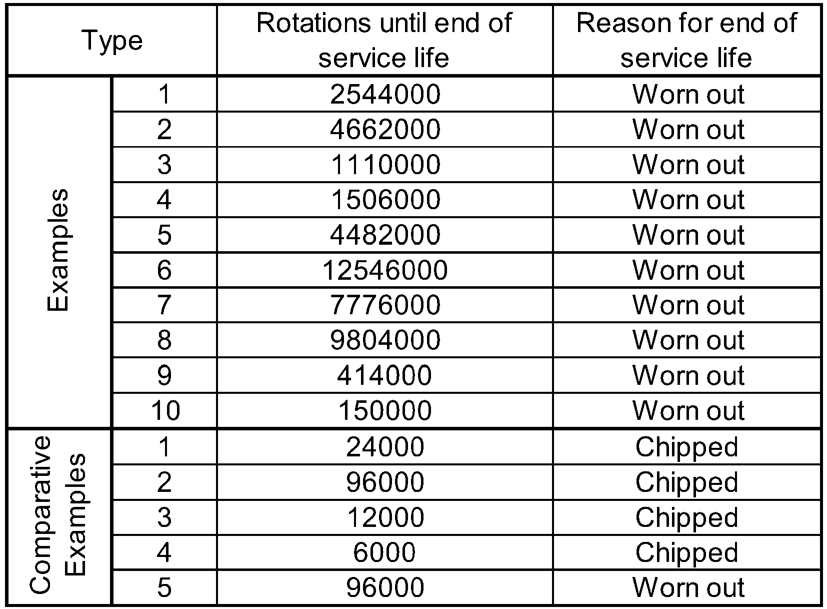

Table 4 demonstrates that Examples 1 to 10 all exhibit a significantly greater number of rotations until failure compared to Comparative Examples 1 to 5, which indicates that the coating layer of cemented carbide enhances the durability of the industrial component (die cutter). Furthermore, the coating layer of the cemented carbide, existing only at the cutting edge, allows for a reduction in the use of expensive raw powder containing W and Co.

### <Example B>

This example mentions that a roll, as shown in the apparatus for forming a coating layer of a cemented carbide in Figure 2, enables the formation of a superior coating layer of a cemented carbide as described above.

A coating layer of the cemented carbide was formed by the following procedure:

### (1) Raw material powder for filler material of rod-shaped cemented carbide

Raw powders for filler material (forming a coating layer of a cemented carbide) made from a rod-shaped cemented carbide, i.e., WC powder (average particle size (Fisher size) of 1.2 µm), Cr₃C₂ powder (average particle size of 1.4 µm), and Co powder (average particle size of 2.1 µm) were prepared. These raw powders were blended to a composition of Co: 10.0 mass%, Cr₃C₂: 0.9 mass%, and WC: balance.

### (2) Compounding (Mixing) and (3) Press Molding

The same procedure as Example A was applied.

### (4) Sintering

A long green compact was heated at a heating rate of 0.5°C/min to 750°C and held thereat for 60 minutes for degreasing. The compact was then heated to 1380°C at a heating rate of 1.7°C/min and held thereat for 60 minutes, under a vacuum of 20 Pa. The sintered compact was then cooled to room temperature at a rate of 2.9°C/min under an argon gas atmosphere.

### (5) HIP Treatment

The same procedure as in Example A was performed, yielding a sintered compact with the same shape as in Example A.

### (6) Coating

A 5 mm thick coating layer of a cemented carbide was deposited with a filler material of a rod-shaped cemented carbide, using the apparatus shown in Figure 2 for forming a coating layer of a cemented carbide. The roll did not have a caliper.

The laser output during welding was 3.5 kW, the laser spot size was 2.0 by 6.0 mm, the filler material feed angle was 60°, the laser incidence angle was 35°, and the hot wire current was 200 A. While a vertical component force of 150 kPa was applied to the surface of an industrial component through a roller, a rod-shaped filler material composed of a cemented carbide was fed, yielding coated cemented carbides of Examples 11 to 12.

It is noted that the surface of the industrial component was irradiated with the laser to form a molten pool whereas the filler material, composed of a rod-shaped cemented carbide, remained in a softened state until it was fed into the molten pool and did not melt during feeding.

For comparison, filler materials composed of cemented carbide rods of the same shape were prepared with the same raw powder materials as those used in Examples 11 and 12. Using the apparatus for forming a coating layer of a cemented carbide shown in Figure 1, which lacks a roll, the same conditions as the apparatus for forming the coating layer of the cemented carbide shown in Figure 2 were applied: laser output of 3.5 kW, laser spot size of 2.0 × 6.0 mm, filler material feed angle of 60°, laser incidence angle of 40°, and hot wire current of 200 A. After feeding the filler material of the rod-shaped cemented carbide while applying the surface of the industrial component perpendicular component force of 150 kPa via the roll, the cutting edge was polished to yield a die cutter (referred to as Examples 13 and 14) having a coating layer of a cemented carbide.

It is noted that the surface of the industrial component was irradiated with the laser to form a molten pool whereas the filler material, composed of a rod-shaped cemented carbide, remained in a softened state until it was fed into the molten pool and did not melt during feeding.

The compositions of the coating layers of cemented carbides in Examples 11 to 14 were determined with an electron microanalyzer. In all Examples 11 to 14, the appearance of the coating layer of the cemented carbide was normal without defects. The compositions of the coating layers of the cemented carbides in Examples 11 to 14 are shown in Table 5, and the feed rate of the filler material made of rod-shaped cemented carbide is shown in Table 6. In Table 6, the feed rate of the filler material made of rod-shaped cemented carbide is denoted as "filler material feed rate".

Table 7 shows the area fractions of the hard phases, binder phases, abnormal phases, and voids, as determined by the aforementioned method, are shown in Table 7 in the coating layer of the cemented carbide formed on the die cutter. The area fraction of the secondary hard phases was 0.0% in all the examples and the comparative examples. The appearance of the coating layer was normal. Since the abnormal phases were identified by EDS and EBSD, while voids were identified by image analysis in Table 7, abnormal phases and voids were identified by different methods. The sum of the area fractions for the hard phases, binder phases, abnormal phases, and voids may accordingly exceed 100%.

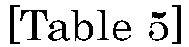

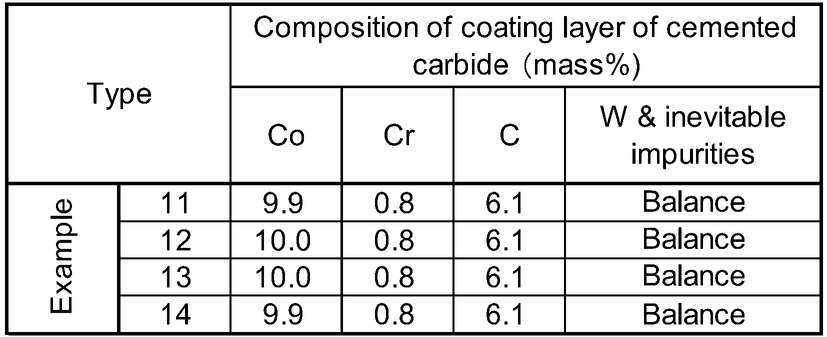

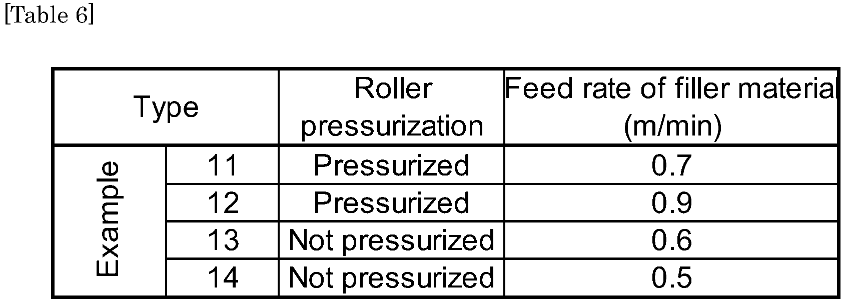

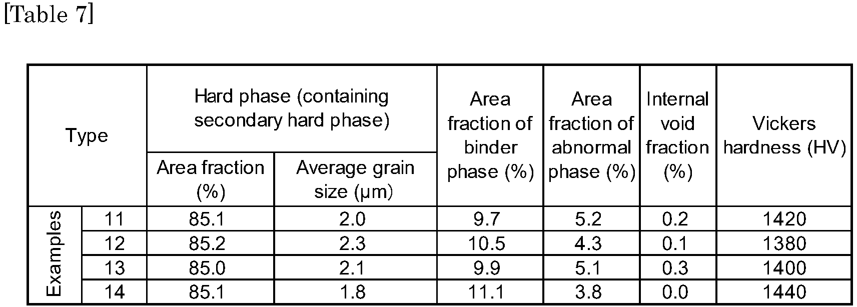

Tables 6 and 7 demonstrate that applying pressure to the filler material of the rod-shaped cemented carbide with rolls improves contact of the filler material with the industrial component and more reliably reduces overlapping and humping, even under an increased feed rate of the filler material (the "filler material feed rate" in Table 6). In other words, feeding the filler material of the rod-shaped cemented carbide while applying pressure with the roll improves productivity.

The embodiments disclosed above are merely illustrative in all respects and are not construed to be limiting. The scope of the present invention is defined by the appended claims, not by the embodiments described above, and it is intended to include all modifications within the gist and scope of the claims and equivalents.

### Reference Signs List

- 1: Industrial component
- 2: Preheater (hot wire torch)
- 3: Filler material composed of cemented carbide with rod shape
- 4: Heat source installed separately from the preheater
- 5: Coating layer of cemented carbide
- 6: Molten pool
- 7: Roll (first roll)
- 10: Die-cut roll
- 11: Anvil roll
- 12: Blade tip
- 13: Bearer

## Claims

1. An apparatus for forming a coating layer on a surface of an industrial component, comprising:
a preheater for preheating a filler material made of a rod-shaped cemented carbide to a softening temperature of the filler material;
a heat source for applying heat to the surface of the industrial component to form a molten pool on the surface of the industrial component; and
a feeder that feeds the preheated filler material into the molten pool,
wherein the filler material is fed in a softened state without being melted until the filler material is fed into the molten pool.

2. The apparatus for forming a coating layer on a surface of an industrial component recited in Claim 1, wherein the feeder includes a roll disposed between an outlet of the preheater and a position above the molten pool.

3. The apparatus for forming a coating layer on a surface of an industrial component recited in Claim 2, wherein the roll has a pressing portion that applies an urging force perpendicular to the softened filler material on the surface of the industrial component.

4. The apparatus for forming a coating layer on a surface of an industrial component recited in Claim 2, wherein the feeder further includes a second roll.

5. The apparatus for forming a coating layer on a surface of an industrial component recited in Claim 1 or 2, wherein the industrial component has at least one surface layer, and the molten pool is formed in the at least one surface layer.

6. A method for forming a coating layer on a surface of an industrial component, comprising:
providing a filler material composed of a rod-shaped cemented carbide;
softening the filler material composed of the rod-shaped cemented carbide;
heating the surface of the industrial component to generate a molten pool in the surface of the industrial component; and
feeding the filler material in a softened state without being melted until the filler material is fed into the molten pool.

7. The method for forming a coating layer on a surface of an industrial component recited in Claim 6, wherein an urging force is applied to the filler material of the rod-shaped cemented carbide while the filler material is fed into the molten pool.

8. The method for forming a coating layer on a surface of an industrial component recited in Claim 7, wherein the urging force is applied with a roll.

9. The method for forming a coating layer on a surface of an industrial component recited in any one of Claims 6 to 8, wherein the industrial component has at least one surface layer.
